# EUROPEAN PATENT SPECIFICATION

(11) **EP 3 042 841 B1**
(45) Date of publication and mention of the grant of the patent: **29.11.2017**
(21) Application number: 14874213.3
(22) Date of filing: 24.12.2014
(51) Int. Cl.: B63B 1/32, B63H 5/125, B63B 3/38

(54) **AZIMUTH THRUSTER-TYPE SHIP**
SCHIFF MIT AZIMUTTRIEBWERK
BATEAU À PROPULSION AZIMUTALE

(30) Priority: 26.12.2013 JP 2013270378
(43) Date of publication of application: 13.07.2016
(73) Proprietor: Mitsubishi Heavy Industries, Ltd., Tokyo 108-8215 (JP)
(72) Inventor: MATSUMOTO, Daisuke, Tokyo 108-8215 (JP); YAMATO, Kuniaki, Tokyo 108-8215 (JP)
(74) Representative: Henkel, Breuer & Partner
(86) International application number: PCT/JP2014/084149
(87) International publication number: WO 2015/098966

(56) References cited:
- JP-A- H08 318 896
- JP-A- H08 318 896
- JP-A- 2004 136 779
- JP-A- 2004 136 779
- JP-A- 2005 280 709
- JP-A- 2005 280 709
- JP-A- 2010 158 989
- JP-A- 2010 158 989
- JP-A- 2012 111 488

## Description

### Technical Field

The present invention relates to an azimuth thruster-type ship which is provided with an azimuth thruster.

### Background Art

As a ship, there is an azimuth thruster-type ship having a turning type propulsion motor, a so-called azimuth thruster, as a propulsion source. The azimuth thruster-type ship can arbitrarily change a direction in which a propulsive force acts, by turning the direction of a propeller, even without using a rudder.

Further, in the azimuth thruster-type ship, a center skeg is provided at the center in a width direction of a bilge. Further, an azimuth thruster-type ship (a ship with two-screw propeller) disclosed in PTL 1 is provided with an auxiliary skeg connected to a bilge between a pair of azimuth thrusters and disposed in parallel with a center skeg. Further, PTL 2 discloses an azimuth thruster-type ship (a pod propeller ship) in which movable flaps are provided at the right and left of a lower edge of a center skeg.

### Citation List

### Patent Literature

[PTL 1] Japanese Unexamined Patent Application Publication No. 2011-168251
[PTL 2] Japanese Unexamined Patent Application Publication No. 2004-136779, and JP2005280709.

### Summary of Invention

### Technical Problem

Here, in an azimuth thruster-type ship, in a case of having a structure without a rudder, course-keeping performance (also referred to as course stability performance) deteriorates. In contrast, as in the devices disclosed in PTLs 1 and 2, by providing an auxiliary skeg or a movable flap in addition to a center skeg, it is possible to improve the course-keeping performance. However, if the auxiliary skeg or the movable flap is provided, although the course-keeping performance can be improved, resistance is obtained at the same time, and therefore, fuel efficiency also deteriorates.

The present invention is for solving the above-described problem and has an object to provide an azimuth thruster-type ship provided with an azimuth thruster, in which it is possible to improve course-keeping performance while suppressing deterioration of fuel efficiency.

### Solution to Problem

In order to achieve the above-described object, according to the present invention, there is provided an azimuth thruster-type ship including the features of claim 1.

In the azimuth thruster-type ship, course-keeping performance can be improved by disposing the plate section to be spaced apart from the center skeg and with a space provided between the plate section and the bilge, forming a flow path through which water passes, between the center skeg and the plate section, and forming a vortex on the upstream side of the azimuth thruster by a water flow which flows through the flow path. Further, by efficiently improving the course-keeping performance by the flow of water, it is possible to prevent an increase in the size of the plate section. In this way, it is possible to improve the course-keeping performance while suppressing deterioration of the fuel efficiency.

Further, it is preferable that a face having the widest area, of the plate section, is parallel to a plane parallel to the center line. By disposing the plate section in this direction, it is possible to further reduce resistance, and thus it is possible to improve the course-keeping performance while suppressing deterioration of the fuel efficiency.

Further, it is preferable that a face having the widest area, of the plate section, is inclined with respect to a plane parallel to the center line. By disposing the plate section in this direction, it is possible to maintain the fuel efficiency and the course-keeping performance at a high level, that is, it is possible to improve the course-keeping performance as well while improving the fuel efficiency.

Further, it is preferable that a face having the widest area, of the plate section, is orthogonal to a plane parallel to the center line. By disposing the plate section in this direction, it is possible to further improve the course-keeping performance, and thus it is possible to further improve the course-keeping performance while suppressing an increase in resistance.

Further, it is preferable that in a face orthogonal to the width direction of the bilge, of the plate section, a ship length direction of the hull becomes a longitudinal direction of a face having the widest area. In this way, it is possible to improve the course-keeping performance while suppressing an increase in resistance to a water flow in the ship length direction.

It is preferable that in a face orthogonal to the width direction of the bilge, of the plate section, a ship length direction of the hull becomes a short side direction of a face having the widest area. In this way, it is possible to make it easy to generate a vortex in a water flow in the ship length direction, and thus it is possible to improve the course-keeping performance.

It is preferable that a bottom surface in a height direction of the hull, of the plate section, is at the same height as a bottom surface of the center skeg. In this way, it is possible to make a structure in which the plate section does not protrude further toward the bottom surface side than the center skeg, while making the distance between the plate section and the bilge of the hull larger. In this way, a vortex of a water flow can be easily formed, and thus the course-keeping performance can be improved. Further, it is possible to prevent the plate section from coming into contact with a member which is present in the bilge ahead of the center skeg, and thus it is possible to prevent a load from being applied to the plate section.

### Advantageous Effects of Invention

According to the present invention, the course-keeping performance can be improved by disposing the plate section to be spaced apart from the center skeg and with a space provided between the plate section and the bilge, forming a flow path through which water passes, between the center skeg and the plate section, and forming a vortex on the upstream side of the azimuth thruster by a water flow which flows through the flow path. Further, by efficiently improving the course-keeping performance by the flow of water, it is possible to prevent an increase in the size of the plate section. In this way, it is possible to improve the course-keeping performance while suppressing an increase in resistance.

### Brief Description of Drawings

Fig. 1 is a side view showing a stern part of a ship according to Embodiment 1 of the present invention.
Fig. 2 is a rear view showing the stern part of the ship according to Embodiment 1 of the present invention.
Fig. 3A is a perspective view showing a schematic configuration of a coupling section.
Fig. 3B is a perspective view showing a schematic configuration of a coupling section.
Fig. 4 is a rear view showing a stern part of a ship according to a modification example of Embodiment 1 of the present invention.
Fig. 5 is a rear view showing a stern part of a ship according to a modification example of Embodiment 1 of the present invention.
Fig. 6 is a side view showing a stern part of a ship according to Embodiment 2 of the present invention.
Fig. 7 is a rear view showing the stern part of the ship according to Embodiment 2 of the present invention.
Fig. 8 is a rear view showing a stern part of a ship according to a modification example of Embodiment 2 of the present invention.
Fig. 9 is a rear view showing a stern part of a ship according to a modification example of Embodiment 2 of the present invention.
Fig. 10 is a rear view showing a stern part of a ship according to Embodiment 3 of the present invention.
Fig. 11 is a rear view showing a stern part of a ship according to a modification example of Embodiment 3 of the present invention.
Fig. 12 is a side view showing a stern part of a ship according to Embodiment 4 of the present invention.
Fig. 13 is a rear view showing the stern part of the ship according to Embodiment 4 of the present invention.

### Description of Embodiments

Hereinafter, embodiments according to the present invention will be described in detail based on the drawings. In addition, the present invention is not limited by these embodiments. Further, in constituent elements in the following embodiments, elements with which those skilled in the art can easily replace them, or substantially the same elements are included.

### [Embodiment 1]

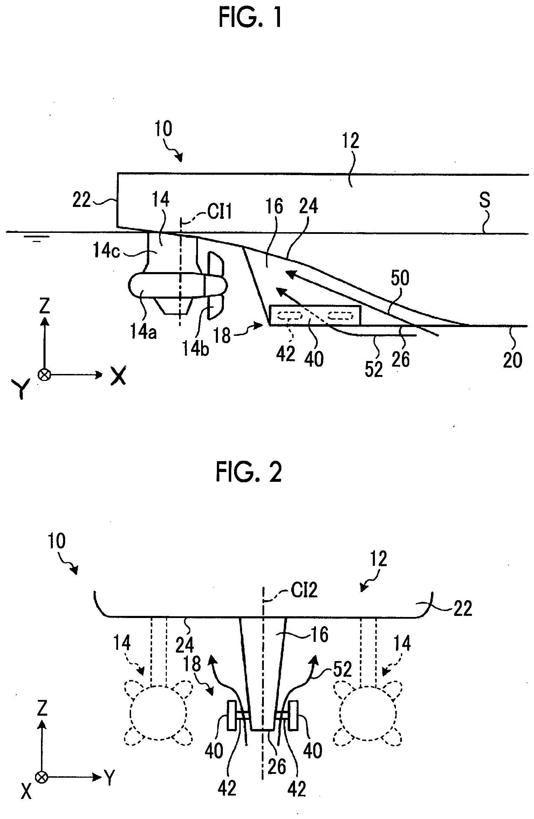

Fig. 1 is a side view showing a stern part of a ship according to Embodiment 1 of the present invention. Fig. 2 is a rear view showing the stern part of the ship according to Embodiment 1 of the present invention.

An azimuth thruster-type ship (hereinafter referred to simply as a ship) 10 of this embodiment has an azimuth thruster 14 provided on the stern side of a hull 12, a center skeg 16 provided further toward the bow side than the azimuth thruster 14, and a course-keeping performance improvement device 18 installed on the bottom surface side of the center skeg 16. The ship 10 is a ship which is provided with the azimuth thruster 14 as a propulsion source, thereby being capable of moving the hull 12 in an arbitrary direction or maintaining the hull 12 at the current position.

In this embodiment, a direction connecting the bow and the stern of the hull 12 of the ship 10 (a ship length direction) is set to be an X-direction, a width direction of the hull 12 (a direction orthogonal to the ship length direction in a plane parallel to a planned draft S) is set to be a Y-direction, and a height direction (a direction perpendicular to the planned draft S) is set to be a Z-direction. The Z-direction is a direction in which the upper side is directed toward the water surface from the seabed, and is a direction in which the lower side is directed toward the seabed from the water surface. Further, a plane passing through the center in the Y-direction of the hull 12 and extending in the X-direction and the Z-direction becomes a hull center plane, and the hull center plane when viewed from the rear of the hull, as shown in Fig. 2, becomes a hull center line Cl2. In the hull 12, a stern bilge 24 which is a part on the stern 22 side of a bilge 20 is gradually inclined upward (to the upper side in the Z-direction) toward the stern 22.

Two azimuth thrusters 14 are turning type propulsion motors and are installed on the stern 22 side of the stern bilge 24. The azimuth thrusters 14 are disposed side by side in the Y-direction with the hull center line Cl2 as the axis of symmetry. The azimuth thrusters 14 are respectively disposed both right and left sides of the stern bilge 24 of the hull 12. Each of the azimuth thrusters 14 has a function as a direction change machine and a function as a propulsion source. The azimuth thruster 14 is disposed in the water to protrude to the lower side of the hull 12 and has a pod section 14a and a propeller 14b provided at the side of the pod section 14a. The pod section 14a rotates 360 degrees in a horizontal direction around a drive shaft 14c extending in a vertical direction. Specifically, the pod section 14a rotates about an azimuth rotation line Cl1. Then, the azimuth thruster 14 moves the hull 12 in an arbitrary direction by the rotational locomotion of the pod section 14a and the driving of the propeller 14b or accurately maintains the current position of the hull 12. In addition, in this embodiment, the azimuth thruster 14 is set to be an azimuth thruster in which an electric motor for driving the propeller 14b is disposed at the pod section 14a. Further, the azimuth thruster 14 may be a type, a so-called Z-drive, in which an electric motor for driving the propeller 14b is disposed inside the hull 12 and mechanically transmits power to the propeller 14b. Further, in this embodiment, the azimuth thrusters 14 are disposed side by side at the right and left of the stern. However, there is also a case where the azimuth thrusters are disposed at the blow as well. For example, three azimuth thrusters may be equipped at each of the bow and the stern.

The center skeg 16 is a plate-like member and is disposed in an area overlapping with the hull center line Cl2 of the stern bilge 24. A bottom surface 26 of the center skeg 16 is disposed at the same height as a portion further on the bow side than the stern bilge 24 of the bilge 20, that is, a portion which is not inclined, of the bilge 20. That is, the center skeg 16 does not protrude further toward the lower side than the bilge 20. The center skeg 16 improves the course-keeping performance of the ship 10.

The course-keeping performance improvement device 18 has two plate sections 40, and coupling sections 42 respectively connecting the plate sections 40 to the center skeg 16. The plate sections 40 are disposed to be spaced apart from the center skeg 16 in the Y-direction. The course-keeping performance improvement device 18 has the two plate sections 40, and the respective plate sections 40 are disposed to face each other on two side surfaces of the center skeg 16, that is, in two planes parallel to an X-Z plane. The plate sections 40 are disposed plane-symmetrically with the hull center line Cl2 as the axis of symmetry. In the plate section 40, the face parallel to the X-Z plane is a face having the largest area and the X-direction thereof is a longitudinal direction. That is, the plate section 40 has a shape in which it extends in the ship length direction and faces the hull center line Cl2 (the hull center plane).

The coupling section 42 connects the plate section 40 and the center skeg 16. The coupling section 42 of this embodiment is a rod-like member in which the X-direction thereof is a longitudinal direction, and an end portion on one side is connected to the plate section 40 and an end portion on the other side is connected to the center skeg 16. In the course-keeping performance improvement device 18, one plate section 40 and the center skeg 16 are connected by two coupling sections 42. The two coupling sections 42 are disposed with a distance therebetween in the X-direction.

The course-keeping performance improvement device 18 has the structure as described above, and the plate section 40 disposed at the position spaced apart from the side surface of the center skeg 16 (the plane along the X-Z plane) in the Y-direction is supported by the coupling sections 42 in a state where a gap is present between the plate section 40 and the center skeg 16. In this way, in a case where the ship 10 advances in a straight advance direction, that is, a case where the ship 10 advances in a direction in which the bow of the hull 12 becomes a leading end in a traveling direction, a water flow flowing along the bilge 20 becomes a flow inclined to the water surface side along the stern bilge 24, as shown by an arrow 50 and an arrow 52. Further, the water flow flowing along the bilge 20 partially passes between the center skeg 16 and the plate section 40, as shown by the arrow 52. The water flow of the arrow 52 increases turning resistance by forming a vortex while spreading in the width direction (the Y-direction) after it passes between the center skeg 16 and the plate section 40. In this way, the course-keeping performance improvement device 18 can improve the course-keeping performance of the ship 10. Further, the course-keeping performance improvement device 18 forms a vortex, thereby improving the course-keeping performance, whereby even if the plate section 40 is made to be small, it is possible to increase the effect of improving the course-keeping performance. In this way, it is possible to improve the course-keeping performance while lowering an increase in resistance which is caused by providing the course-keeping performance improvement device 18. Therefore, the course-keeping performance improvement device 18 can improve the course-keeping performance (course stability performance) while reducing deterioration of fuel efficiency due to an increase in resistance.

Further, in the course-keeping performance improvement device 18, by connecting the plate section 40 to the center skeg 16 by the coupling section 42, it is possible to further suppress an increase in resistance than in a case of connecting the plate section 40 to the hull 12. Further, in the course-keeping performance improvement device 18, by disposing the plate section 40 at a position overlapping with the bottom surface 26 of the center skeg 16, it is possible to prevent the plate section 40 from protruding further than the bilge 20, while making the distance between the plate section 40 and the stern bilge 24 longer. In this way, it is possible to make a water flow passing through the plate section 40 a water flow having a faster speed, and thus it is possible to improve the course-keeping performance. Further, due to a structure in which the plate section 40 does not protrude further than the bilge 20, at the time of the repair and the maintenance of the ship 12, it is possible to prevent a load from concentrating on the plate section 40 due to the plate section 40 becoming the lowest side of the ship 10 and thus each part being supported by the plate section 40.

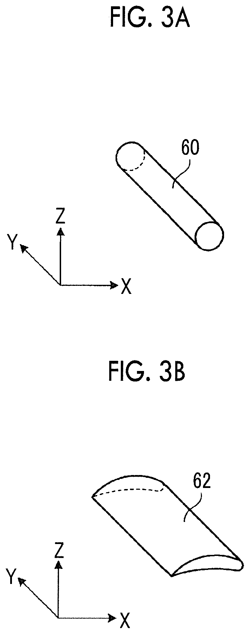

Fig. 3A is a perspective view showing a schematic configuration of a coupling section. Fig. 3B is a perspective view showing a schematic configuration of a coupling section. In this embodiment, the coupling section 42 connecting the plate section 40 to the center skeg 16 is set to have a cross section having an elliptical shape in which the X-direction thereof becomes the major axis. However, there is no limitation thereto. The course-keeping performance improvement device 18 may have a coupling section 60 which is a rod-like member having a circular cross section, as shown in Fig. 3A, and may have a coupling section 62 in which a cross section has an airfoil shape, specifically, a shape in which an end face on the bow side has a curved surface and a thickness becomes thinner as it goes toward the stern side, as shown in Fig. 3B. By adopting an airfoil shape, as in the coupling section 62, it is possible to further reduce resistance which is caused by installing the coupling section 62. Further, in a case of providing the coupling section 62, it is preferable to tilt the airfoil shape along a water flow.

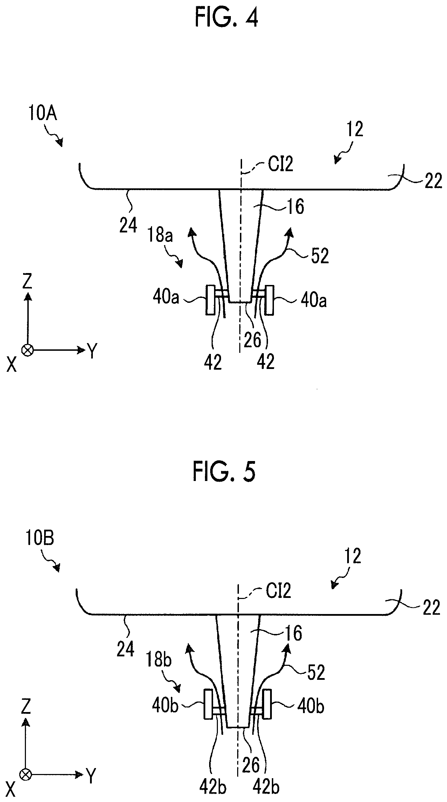

Fig. 4 is a rear view showing a stern part of a ship according to a modification example of Embodiment 1 of the present invention. In addition, in Fig. 4, illustration of the azimuth thruster 14 is omitted. Also in the following rear views, the illustration of the azimuth thruster 14 is omitted. A ship 10A shown in Fig. 4 has the same structure as the ship 10 except for the position of a plate section 40a of a course-keeping performance improvement device 18a. In the course-keeping performance improvement device 18a, the plate section 40a protrudes further toward the lower side in the Z-direction (the height direction) than the bottom surface 26 of the center skeg 16. In the course-keeping performance improvement device 18a, the plate section 40a protrudes further toward the lower side than the bottom surface 26 and the bilge 20, whereby it is possible to make the distance between the plate section 40a and the stern bilge 24 larger, and thus it is possible to improve propulsion performance.

Fig. 5 is a rear view showing a stern part of a ship according to a modification example of Embodiment 1 of the present invention. A ship 10B shown in Fig. 5 has the same structure as the ship 10 except for the positions of a plate section 40b and a coupling section 42b of a course-keeping performance improvement device 18b. In the course-keeping performance improvement device 18b, the lower side in the Z-direction of the plate section 40b is disposed at a position further on the upper side in the Z-direction (the height direction) than the bottom surface 26 of the center skeg 16. Further, the coupling section 42b is disposed further toward the upper side in the Z-direction than in the coupling section 42 and connects the center skeg 16 and the coupling section 42b. In the course-keeping performance improvement device 18b, also by disposing the plate section 40b further toward the upper side than the bottom surface 26 and the bilge 20, it is possible to improve propulsion performance.

### [Embodiment 2]

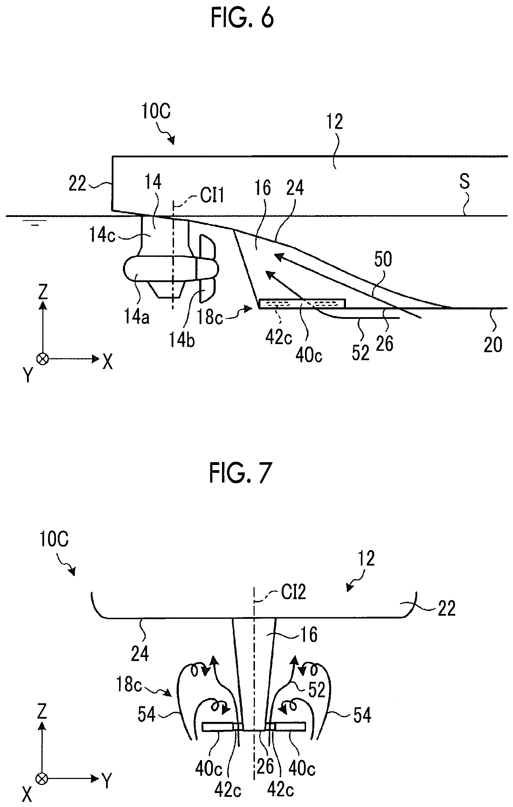

Fig. 6 is a side view showing a stern part of a ship according to Embodiment 2 of the present invention. Fig. 7 is a rear view showing the stern part of the ship according to Embodiment 2 of the present invention. A ship 10C of Embodiment 2 has the same configuration as the ship 10 except for a course-keeping performance improvement device 18c, and therefore, portions equivalent to those in Embodiment 1 are denoted by the same reference numerals and description is omitted.

The course-keeping performance improvement device 18c has two plate sections 40c, and coupling sections 42c respectively connecting the plate sections 40c to the center skeg 16. The plate sections 40c are disposed to be spaced apart from the center skeg 16 in the Y-direction. The course-keeping performance improvement device 18c has the two plate sections 40c, and the respective plate sections 40c are disposed to face each other on two side surfaces of the center skeg 16, that is, in two planes parallel to the X-Z plane. The plate sections 40c are disposed plane-symmetrically with the hull center line Cl2 as the axis of symmetry. In the plate section 40c, the face parallel to the X-Y plane is a face having the largest area and the X-direction thereof is a longitudinal direction. That is, the plate section 40c extends in the ship length direction and is disposed in a direction in which the face having the largest area extends in an extending direction of the planned draft S or the bilge 20.

The coupling section 42c connects the plate section 40c and the center skeg 16. The coupling section 42c of this embodiment is a rod-like member in which the X-direction thereof is a longitudinal direction, and an end portion on one side is connected to the plate section 40c and an end portion on the other side is connected to the center skeg 16. In the course-keeping performance improvement device 18c, one plate section 40c and the center skeg 16 are connected by two coupling sections 42c. The two coupling sections 42c are disposed with a distance therebetween in the X-direction.

The course-keeping performance improvement device 18c has the structure as described above, and the plate section 40c disposed at the position spaced apart from the side surface of the center skeg 16 (the plane along the X-Z plane) in the Y-direction is supported by the coupling sections 42c in a state where a gap is present between the plate section 40c and the center skeg 16. In this way, in a case where the ship 10C advances in a straight advance direction, that is, a case where the ship 10C advances in a direction in which the bow of the hull 12 becomes a leading end in a traveling direction, a water flow flowing along the bilge 20 becomes a flow inclined to the water surface side along the stern bilge 24, as shown by the arrow 50 and the arrow 52. Further, the water flow flowing along the bilge 20 partially passes between the center skeg 16 and the plate section 40c, as shown by the arrow 52. The water flow of the arrow 52 increases turning resistance by forming a vortex while spreading in the width direction (the Y-direction) after it passes between the center skeg 16 and the plate section 40c. Further, in the course-keeping performance improvement device 18c, the plate section 40c has a shape in which it has a face parallel to the bilge 20 and extends in the width direction, whereby a water flow hitting against the plate section 40c and wrapping around from the side opposite to the coupling section 42c of the plate section 40c to the stern bilge 24 side, of the flow flowing along the bilge 20 and heading for between the stern bilge 24 and the plate section 40c, forms a vortex when it has flowed into between the stern bilge 24 and the plate section 40c, as shown by an arrow 54. In this way, the course-keeping performance improvement device 18c can improve the course-keeping performance of the ship 10C. Further, the course-keeping performance improvement device 18c forms a vortex, thereby improving the course-keeping performance, whereby even if the plate section 40c is made to be small, it is possible to increase the effect of improving the course-keeping performance. In this way, it is possible to improve the course-keeping performance while lowering an increase in resistance which is caused by providing the course-keeping performance improvement device 18c. Therefore, the course-keeping performance improvement device 18c can improve the course-keeping performance (course stability performance) while reducing deterioration of fuel efficiency due to an increase in resistance. Further, the course-keeping performance improvement device 18c can further improve the course-keeping performance than in the course-keeping performance improvement device 18. However, resistance increases.

Further, in the course-keeping performance improvement device 18c, by connecting the plate section 40c to the center skeg 16 by the coupling section 42c, it is possible to further suppress an increase in resistance than in a case of connecting the plate section 40c to the hull 12. Further, in the course-keeping performance improvement device 18c, by disposing the plate section 40c at a position overlapping with the bottom surface 26 of the center skeg 16, it is possible to prevent the plate section 40c from protruding further than the bilge 20, while making the distance between the plate section 40c and the stern bilge 24 longer. In this way, it is possible to make a water flow passing through the plate section 40c a water flow having a faster speed, and thus it is possible to increase the course-keeping performance. Further, due to a structure in which the plate section 40c does not protrude further than the bilge 20, at the time of the repair and the maintenance of the ship 12, it is possible to prevent a load from concentrating on the plate section 40c due to the plate section 40c becoming the lowest side of the ship 10C and thus each part being supported by the plate section 40c.

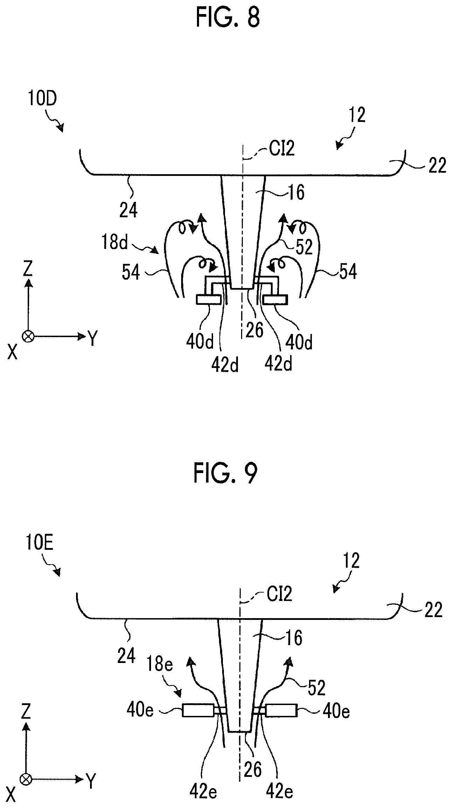

Fig. 8 is a rear view showing a stern part of a ship according to a modification example of Embodiment 2 of the present invention. A ship 10D shown in Fig. 8 has the same structure as the ship 10C except for the position of a plate section 40d and a coupling section 42d of a course-keeping performance improvement device 18d. In the course-keeping performance improvement device 18d, the plate section 40d protrudes further toward the lower side in the Z-direction (the height direction) than the bottom surface 26 of the center skeg 16. The coupling section 42d is an L-shaped rod-like member, and an end portion of a portion extending in the Y-direction is connected to the center skeg 16 and an end portion of a portion extending in the Z-direction is connected to the plate section 40d. Further, the coupling section 42d is set to have an L-shape. However, the coupling section 42d may be a rod-like member inclined with respect to the Z-direction and the Y-direction. In the course-keeping performance improvement device 18d, the plate section 40d protrudes further toward the lower side than the bottom surface 26 and the bilge 20, whereby it is possible to make the distance between the plate section 40d and the stern bilge 24 larger, and thus it is possible to improve propulsion performance.

Fig. 9 is a rear view showing a stern part of a ship according to a modification example of Embodiment 2 of the present invention. A ship 10E shown in Fig. 9 has the same structure as the ship 10C except for the positions of a plate section 40e and a coupling section 42e of a course-keeping performance improvement device 18e. In the course-keeping performance improvement device 18e, the lower side in the Z-direction of the plate section 40e is disposed at a position further on the upper side in the Z-direction (the height direction) than the bottom surface 26 of the center skeg 16. Further, the coupling section 42e is disposed further toward the upper side in the Z-direction than in the coupling section 42 and connects the center skeg 16 and the coupling section 42e. In the course-keeping performance improvement device 18e, also by disposing the plate section 40e further toward the upper side than the bottom surface 26 and the bilge 20, it is possible to improve propulsion performance.

### [Embodiment 3]

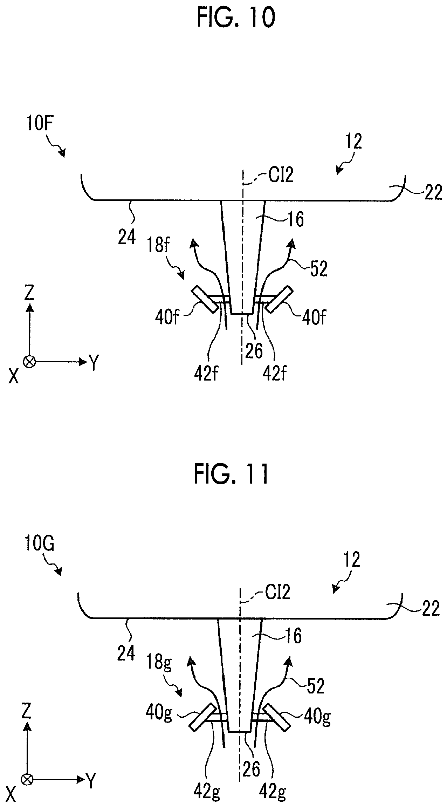

Fig. 10 is a rear view showing a stern part of a ship according to Embodiment 3 of the present invention. A ship 10F of Embodiment 3 has the same configuration as the ship 10 except for a course-keeping performance improvement device 18f, and therefore, portions equivalent to those in Embodiment 1 are denoted by the same reference numerals and description is omitted.

The course-keeping performance improvement device 18f has two plate sections 40f, and coupling sections 42f respectively connecting the plate sections 40f to the center skeg 16. The plate sections 40f are disposed to be spaced apart from the center skeg 16 in the Y-direction. The course-keeping performance improvement device 18f has the two plate sections 40f, and the respective plate sections 40f are disposed to face each other on two side surfaces of the center skeg 16, that is, in two planes parallel to the X-Z plane. The plate sections 40f are disposed plane-symmetrically with the hull center line Cl2 as the axis of symmetry. In the plate section 40f, a face having the largest area is inclined with respect to the X-Z plane and the X-Y plane, and the X-direction thereof is a longitudinal direction. That is, the plate section 40f extends in the ship length direction and has a shape in which a plate parallel to the X-Z plane is rotated around an X-axis or a plate parallel to the X-Y plane is rotated around the X-axis. The plate section 40f of this embodiment is inclined in a direction in which the height direction thereof is directed to the lower side, that is, further toward the bilge side than the water surface, as it approaches the hull center line Cl2.

The coupling section 42f connects the plate section 40f and the center skeg 16. The coupling section 42f of this embodiment is a rod-like member in which the X-direction thereof is a longitudinal direction, and an end portion on one side is connected to the plate section 40f and an end portion on the other side is connected to the center skeg 16. In the course-keeping performance improvement device 18f, one plate section 40f and the center skeg 16 are connected by two coupling sections 42f. The two coupling sections 42f are disposed with a distance therebetween in the X-direction.

The course-keeping performance improvement device 18f has the structure as described above, and the plate section 40f disposed at the position spaced apart from the side surface of the center skeg 16 (the plane along the X-Z plane) in the Y-direction is supported by the coupling sections 42f in a state where a gap is present between the plate section 40f and the center skeg 16. In this way, in a case where the ship 10F advances in a straight advance direction, that is, a case where the ship 10F advances in a direction in which the bow of the hull 12 becomes a leading end in a traveling direction, a water flow flowing along the bilge 20 becomes a flow inclined to the water surface side along the stern bilge 24, as shown by the arrow 50 and the arrow 52. Further, the water flow flowing along the bilge 20 partially passes between the center skeg 16 and the plate section 40f, as shown by the arrow 52. The water flow of the arrow 52 increases turning resistance by forming a vortex while spreading in the width direction (the Y-direction) after it passes between the center skeg 16 and the plate section 40. Further, the course-keeping performance improvement device 18f has a shape in which it further extends in the width direction than in the plate section 40 by inclining the plate sections 40f with respect to the hull center line Cl2, whereby a water flow hitting against the plate section 40f, thereby wrapping around from the side opposite to the coupling section 42f of the plate section 40f to the stern bilge 24 side, of a flow flowing along the bilge 20 and heading for between the stern bilge 24 and the plate section 40f, forms a vortex when it has flowed into between the stern bilge 24 and the plate section 40f. In this way, the course-keeping performance improvement device 18f can improve the course-keeping performance of the ship 10. Further, the course-keeping performance improvement device 18f forms a vortex, thereby improving the course-keeping performance, whereby even if the plate section 40f is made to be small, it is possible to increase the effect of improving the course-keeping performance. In this way, it is possible to improve the course-keeping performance while lowering an increase in resistance which is caused by providing the course-keeping performance improvement device 18f. Therefore, the course-keeping performance improvement device 18f can improve the course-keeping performance (course stability performance) while reducing deterioration of fuel efficiency due to an increase in resistance. Further, the course-keeping performance improvement device 18f can further improve the course-keeping performance than in the course-keeping performance improvement device 18 and cannot further improve the course-keeping performance than in the course-keeping performance improvement device 18c. Further, in the course-keeping performance improvement device 18f, resistance increases more than in the course-keeping performance improvement device 18 and resistance decreases more than in the course-keeping performance improvement device 18c.

Further, in the course-keeping performance improvement device 18f, by connecting the plate section 40f to the center skeg 16 by the coupling section 42f, it is possible to further suppress an increase in resistance than in a case of connecting the plate section 40f to the hull 12. Further, in the course-keeping performance improvement device 18f, by disposing the plate section 40f at a position overlapping with the bottom surface 26 of the center skeg 16, it is possible to prevent the plate section 40f from protruding further than the bilge 20, while making the distance between the plate section 40f and the stern bilge 24 longer. In this way, it is possible to make a water flow passing through the plate section 40f a water flow having a faster speed, and thus it is possible to increase the course-keeping performance. Further, due to a structure in which the plate section 40f does not protrude further than the bilge 20, at the time of the repair and the maintenance of the ship 12, it is possible to prevent a load from concentrating on the plate section 40f due to the plate section 40f becoming the lowest side of the ship 10F and thus each part being supported by the plate section 40f.

Fig. 11 is a rear view showing a stern part of a ship according to a modification example of Embodiment 3 of the present invention. A ship 10G shown in Fig. 11 has the same structure as the ship 10F except for the position of a plate section 40g and a coupling section 42g of a course-keeping performance improvement device 18g. The plate section 40g extends in the ship length direction and has a shape in which a plate parallel to the X-Z plane is rotated around the X-axis or a plate parallel to the X-Y plane is rotated around the X-axis. In the course-keeping performance improvement device 18g, a direction in which the plate section 40g is inclined with respect to the X-Z plane and the X-Y plane is different from that in the plate section 40f. The plate section 40g of this embodiment is inclined in a direction in which the height direction thereof is directed to the upper side, that is, further toward the water surface side than the bilge, as it approaches the hull center line Cl2.

In the course-keeping performance improvement device 18g, even in a case where a direction of inclination with respect to the X-Z plane and the X-Y plane is different from that in the course-keeping performance improvement device 18f, it is possible to obtain the same effect as that in the course-keeping performance improvement device 18f.

### [Embodiment 4]

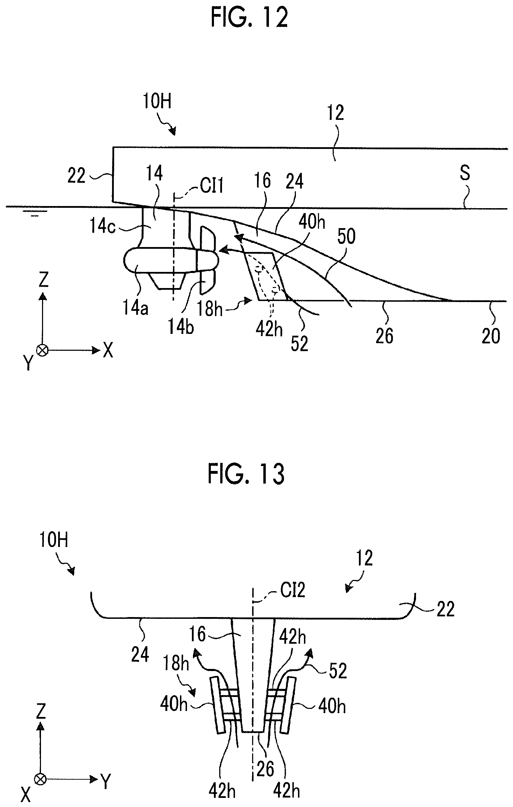

Fig. 12 is a side view showing a stern part of a ship according to Embodiment 4 of the present invention. Fig. 13 is a rear view showing the stern part of the ship according to Embodiment 4 of the present invention. A ship 10H of Embodiment 4 has the same configuration as the ship 10 except for a course-keeping performance improvement device 18h, and therefore, portions equivalent to those in Embodiment 1 are denoted by the same reference numerals and description is omitted.

The course-keeping performance improvement device 18h has two plate sections 40h, and coupling sections 42h respectively connecting the plate sections 40h to the center skeg 16. The plate sections 40h are disposed to be spaced apart from the center skeg 16 in the Y-direction. The course-keeping performance improvement device 18h has the two plate sections 40h, and the respective plate sections 40h are disposed to face each other on two side surfaces of the center skeg 16, that is, in two planes parallel to the X-Z plane. The plate sections 40h are disposed plane-symmetrically with the hull center line Cl2 as the axis of symmetry. In the plate section 40h, the face parallel to the X-Z plane (the face along the X-Z plane) is a face having the largest area and the Z-direction thereof is a longitudinal direction. That is, the plate section 40h has a shape in which it extends in the height direction and faces the hull center line Cl2 (the hull center plane).

The coupling section 42h connects the plate section 40h and the center skeg 16. The coupling section 42h of this embodiment is a rod-like member in which the Y-direction thereof is a longitudinal direction, and an end portion on one side is connected to the plate section 40h and an end portion on the other side is connected to the center skeg 16. In the course-keeping performance improvement device 18h, one plate section 40h and the center skeg 16 are connected by two coupling sections 42h. The two coupling sections 42h are disposed with a distance therebetween in the X-direction and the Z-direction.

The course-keeping performance improvement device 18h has the structure as described above, and the plate section 40h disposed at the position spaced apart from the side surface of the center skeg 16 (the plane along the X-Z plane) in the Y-direction is supported by the coupling sections 42h in a state where a gap is present between the plate section 40h and the center skeg 16. In this way, in a case where the ship 10H advances in a straight advance direction, that is, a case where the ship 10H advances in a direction in which the bow of the hull 12 becomes a leading end in a traveling direction, a water flow flowing along the bilge 20 becomes a flow inclined to the water surface side along the stern bilge 24, as shown by the arrow 50 and the arrow 52. Further, the water flow flowing along the bilge 20 partially passes between the center skeg 16 and the plate section 40h, as shown by the arrow 52. The water flow of the arrow 52 increases turning resistance by forming a vortex while spreading in the width direction (the Y-direction) after it passes between the center skeg 16 and the plate section 40h. Further, in the course-keeping performance improvement device 18h, the plate section 40h has a shape in which the Z-direction (the height direction) thereof is a longitudinal direction, whereby it is possible to form a vortex in the ship length direction as well. Specifically, it is possible to form a vortex on the downstream (the azimuth thruster 14) side in the X-direction of the plate section 40h. In this way, the course-keeping performance improvement device 18h can improve the course-keeping performance of the ship 10H. Further, the course-keeping performance improvement device 18h forms a vortex, thereby improving the course-keeping performance, whereby even if the plate section 40h is made to be small, it is possible to increase the effect of improving the course-keeping performance. In this way, it is possible to improve the course-keeping performance while lowering an increase in resistance which is caused by providing the course-keeping performance improvement device 18h. Therefore, the course-keeping performance improvement device 18h can improve the course-keeping performance (course stability performance) while reducing deterioration of fuel efficiency due to an increase in resistance. Here, in the course-keeping performance improvement device 18h, the plate section 40h is longer in the height direction than that in the course-keeping performance improvement device 18, and therefore, although the course-keeping performance is improved, resistance increases. Further, in the course-keeping performance improvement device 18h, it is possible to obtain the same effect as the other course-keeping performance improvement device 18.

### Reference Signs List

- 10:: azimuth thruster-type ship
- 12:: hull
- 14:: azimuth thruster
- 14a:: pod section
- 14b:: propeller
- 14c:: drive shaft
- 16:: center skeg
- 18:: course-keeping performance improvement device
- 20:: bilge
- 22:: stern
- 24:: stern bilge
- 26:: bottom surface
- 40:: plate section
- 42:: coupling section
- 50, 52, 54:: arrow
- Cl1:: azimuth rotation line
- Cl2:: hull center line
- S:: planned draft

## Claims

1. An azimuth thruster-type ship (10;10A-H) comprising:
an azimuth thruster (14) provided on the stern side of a hull (12);
a center skeg (16) disposed on a center line (C12) in a width direction (Y) of a bilge (20,24) of the hull (12); and
a course-keeping performance improvement device (18;18ah) disposed on a side surface of the center skeg (16),
wherein the course-keeping performance improvement device (18;18a-h) has
a plate section (40;40a-h) which is disposed to be spaced apart from the center skeg (16) and the bilge (20,24) and is shorter in length in a direction parallel to the center line (C12) than the center skeg (16),
**characterized in that** it further comprises
a plurality of coupling sections (42;60;62;42a-h) which connect the plate section (40;40a-h) and the center skeg (16) with a gap provided between the plate section (40;40a-h) and the center skeg (16), and **in that** one coupling section (42;60;62;42a-h) is disposed to be spaced apart from another coupling section (42;60;62;42a-h) adjacent thereto, whereby a gap is provided therebetween.

2. The azimuth thruster-type ship (10;10A;10B) according to Claim 1, wherein a face having the widest area, of the plate section (40;40a;40b), is parallel to a plane (XZ) parallel to the center line (C12).

3. The azimuth thruster-type ship (10F;10G;10H) according to Claim 1, wherein a face having the widest area, of the plate section (40f;40g;40h), is inclined with respect to a plane (XZ) parallel to the center line (C12).

4. The azimuth thruster-type ship (10C; 10D; 10E) according to Claim 1, wherein a face having the widest area, of the plate section (40c; 40d; 40e), is orthogonal to a plane (XZ) parallel to the center line (C12).

5. The azimuth thruster-type ship (10;10A-10G) according to any one of Claims 1 to 4, wherein in a face orthogonal to the width direction (Y) of the bilge (20,24), of the plate section (40;40a-g), a ship length direction (X) of the hull (12) is a longitudinal direction of a face having the widest area.

6. The azimuth thruster-type ship (10H) according to any one of Claims 1 to 4, wherein in a face orthogonal to the width direction (Y) of the bilge (20,24), of the plate section (40h), a ship length direction (X) of the hull (12) is a short side direction of a face having the widest area.

7. The azimuth thruster-type ship (10;10F-H) according to any one of Claims 1 to 6, wherein a bottom surface in a height direction (Z) of the hull (12), of the plate section (40;40f-h), is at the same height as a bottom surface (26) of the center skeg (16).

## Patentansprüche

1. Ein Schiff mit Azimutantrieb (10;10A-H) mit:
einem Azimutantrieb (14), der an der Heckseite eines Rumpfs (12) vorgesehen ist,
einem Mittelskeg (16), das an einer Mittellinie (C12) in einer Querrichtung (Y) eines Kielraums bzw. einer Bilge (20,24) des Rumpfs (12) angeordnet ist, und
einer Kurshalte-Leistungsverbesserungsvorrichtung (18;18a-h), die an einer Seitenfläche des Mittelskegs (16) angeordnet ist,
wobei die Kurshalte-Leistungsverbesserungsvorrichtung (18-18a-h) einen Plattenabschnitt (40;40a-h) besitzt, der so angeordnet ist, dass er von dem Mittelskeg (16) und dem Kielraum bzw. der Bilge (20,24) beabstandet ist und eine kürzere Länge besitzt in einer Richtung parallel zu der Mittellinie (C12) als das Mittelskeg (16),
**dadurch gekennzeichnet, dass** es weiterhin eine Vielzahl von Kopplungsabschnitten (42;60;62;42a-h) aufweist, die den Plattenabschnitt (40;40a-h) und das Mittelskeg (16) verbinden, wobei ein Zwischenraum zwischen dem Plattenabschnitt (40;40a-h) und dem Mittelskeg (16) vorgesehen ist, und
dass ein Kopplungsabschnitt (42;60;62;42a-h) so angeordnet ist, dass er von einem anderen Kopplungsabschnitt (42;60,62;42a-h), der daran angrenzt, beabstandet ist, wodurch ein Zwischenraum dazwischen vorgesehen ist.

2. Das Schiff mit Azimutantrieb (10;10A;10B) gemäß Anspruch 1, wobei eine Fläche des Plattenabschnitts (40;40a;40b), die die weiteste bzw. größte Abmessung besitzt, parallel zu einer Ebene (XZ) parallel zu der Mittellinie (C12) ist.

3. Das Schiff mit Azimutantrieb (10F; 10G; 10H) gemäß Anspruch 1, wobei eine Fläche des Plattenabschnitts (40f;40g;40h), die die weiteste bzw. größte Abmessung besitzt, bezüglich einer Ebene (XZ) parallel zu der Mittellinie (C12) geneigt ist.

4. Das Schiff mit Azimutantrieb (10C; 10D; 10E) gemäß Anspruch 1, wobei eine Fläche des Plattenabschnitts (40c;40d;40e), die die weiteste bzw. größte Abmessung besitzt, orthogonal zu einer Ebene (XZ) parallel zu der Mittellinie (C12) ist.

5. Das Schiff mit Azimutantrieb (10;10A-10G) gemäß einem der Ansprüche 1 bis 4, wobei in einer Fläche des Plattenabschnitts (40;40a-g) orthogonal zu der Querrichtung (Y) des Kielraums bzw. der Bilge (20,24) eine Schiffs-Längsrichtung (X) des Rumpfs (12) eine longitudinale Richtung einer Fläche mit der weitesten bzw. größten Abmessung ist.

6. Das Schiff mit Azimutantrieb (10H) gemäß einem der Anspruche 1 bis 4, wobei in einer Fläche des Plattenabschnitts (40h) orthogonal zu der Querrichtung (Y) des Kielraums bzw. der Bilge (20,24) eine Schiffs-Längsrichtung (X) des Rumpfs (12) eine Richtung einer kurzen Seite einer Fläche mit der weitesten bzw. größten Abmessung ist.

7. Das Schiff mit Azimutantrieb (10; 10F-H) gemäß einem der Ansprüche 1 bis 6, wobei eine Bodenfläche des Plattenabschnitts (40;40f-h) in einer Höhenrichtung (Z) des Rumpfs (12) sich an derselben Höhe befindet wie eine Bodenfläche (26) des Mittelskegs (16).

## Revendications

1. Bateau (10; 10A-H) de type à propulsion azimutale, comprenant :
un propulseur (14) azimutal prévu sur le côté arrière d'une coque (12) ;
un talon (16) central disposé sur une ligne (C12) centrale dans une direction (Y) en largeur d'un fond (20, 24) de la coque (12) et
un dispositif (18 ; 18a-h) d'amélioration des performances de maintien du cap, disposé sur une surface latérale du talon (16) central,
dans lequel le dispositif (18 ; 18a-h) d'amélioration des performances de maintien du cap a
une partie (40 ; 40a-h) en plaque, qui est disposée de manière à être à distance du talon (16) central et du fond (20, 24) et est d'une longueur plus courte dans une direction parallèle à la ligne (C12) centrale que le talon (16) central,
**caractérisé en ce qu'**il comprend en outre
une pluralité de parties (42 ; 60 ; 62 ; 42a-h) de liaison, qui relient la partie (40 ; 40a-h) en plaque et le talon (16) central, en ayant un intervalle prévu entre la partie (40 ; 40a-h) en plaque et le talon (16) central et
**en ce qu'**une partie (42 ; 60 ; 62 ; 42a-h) de liaison est disposée de manière à être à distance d'une autre partie (42 ; 60 ; 62 ; 42a-h) de liaison, qui en est voisine, un intervalle étant prévu entre elles.

2. Bateau (10 ; 10A ; 10B) de type à propulsion azimutale suivant la revendication 1, dans lequel une face, ayant la surface la plus large de la partie (40 ; 40a ; 40b) en plaque, est parallèle à un plan (XZ) parallèle à la ligne (C12) centrale.

3. Bateau (10F ; 10G ; 10H) de type à propulsion azimutale suivant la revendication 1, dans lequel une face, ayant la surface la plus large, de la partie (40f ; 40g ; 40h) en plaque est inclinée par un plan (XZ) parallèle à la ligne (C12) centrale.

4. Bateau (10C ; 10D ; 10E) de type à propulsion azimutale suivant la revendication 1, dans lequel une face, ayant la surface la plus large, de la partie (40c ; 40d ; 40^{e}) en plaque est orthogonale à un plan (XZ) parallèle à la ligne (C12) centrale.

5. Bateau (10 ; 10A-10G) de type à propulsion azimutale suivant l'une quelconque des revendications 1 à 4, dans lequel, dans une face orthogonale à la direction (Y) en largeur du fond (20, 24) de la partie (40 ; 40a-g) en plaque, une direction (X), suivant la longueur du bateau, de la coque (12) est une direction longitudinale d'une face ayant la surface la plus large.

6. Bateau (10H) de type à propulsion azimutale suivant l'une quelconque des revendications 1 à 4, dans lequel une face, orthogonale à la direction (Y) en largeur du fond (20, 24), de la partie (40h) en plaque, une direction (X), suivant la longueur du bateau, de la coque (12) est une direction du côté court d'une face ayant la surface la plus large.

7. Bateau (10 ; 10F-H) de type à propulsion azimutale suivant l'une quelconque des revendications 1 à 6, dans lequel une surface de fond, dans une direction (Z) en hauteur de la coque (12), de la partie (40 ; 40f-h) en plaque est à la même hauteur qu'une surface (26) de fond du talon (16) central.
